# EUROPÄISCHE PATENTSCHRIFT

(11) **EP 1 134 075 B1**
(45) Veröffentlichungstag und Bekanntmachung des Hinweises auf die Patenterteilung: **31.03.2004**
(21) Anmeldenummer: 01103157.2
(22) Anmeldetag: 10.02.2001
(51) Int. Cl.: B32B 31/00, B29C 65/00, C08J 5/12

(54) **Kunstoffverbunde und Verfahren zu ihrer Herstellung**
Polymer laminates and methods for making them
Laminés de polymères et méthodes de fabrication de ces derniers

(30) Priorität: 15.03.2000 DE 10012421
(43) Veröffentlichungstag der Anmeldung: 19.09.2001
(73) Patentinhaber: Röhm GmbH & Co. KG, 64293 Darmstadt (DE)
(72) Erfinder: Benz, Volker, Dr., 64739 Höchst (DE); Rimpl, Manfred, 64853 Otzberg-Lengfeld (DE)

(56) Entgegenhaltungen:
- EP-A- 0 581 564
- EP-A- 0 710 548
- DE-U- 9 210 767
- US-A- 5 624 524
- US-A- 5 762 741

## Beschreibung

Die Erfindung betrifft ein Verfahren zur Herstellung von flächigen Verbunden aus Kunststoff gemäß dem Oberbegriff des Patentanspruchs 1 sowie einen Kunststoffverbund erhältlich nach diesem verfahren.

### Stand der Technik

EP-A 584 593 beschreibt Kunststoffverbunde, bei denen mindestens ein Teil des Verbundes aus Acrylglas besteht und mindestens eine Acrylglasverbindung durch Verschweißen bewirkt ist, wobei das Verbinden durch thermisches Verschweißen in Gegenwart einer 0,01 bis zu einigen mm dicken Zwischenschicht eines im wesentlichen aus Methylmethacrylat aufgebauten Polymeren erreicht ist. Die Formteile aus Acrylglas können in Gegenwart der dünnen Zwischenschichten aus Polymethylmethacrylat mit Formteilen aus anderen Kunststoffen, wie PVC, Celluloseestem, Polystyrol, ABS-Kunststoffen, Polycarbonat, insbesondere dem Polycarbonat des Bisphenol.A, verbunden sein. Bei diesem Verfahren treten mitunter Einschlüsse von Luft oder monomeren Zersetzungsprodukten im Verbund auf, wenn die vorgeschriebene Temperaturführung nicht exakt eingehalten wird.

EP-A 581 564 beschreibt ein Verfahren zur Herstellung von Kunststoffverbunden aus einer Acrylplatte, z. B. mit einer Dicke von 2 oder 3 mm und einem "Overlayfilm" mittels einer "hot-melt"-Klebeschicht.

US 5,762,741 betrifft ein Verfahren zur Herstellung von Gegenständen aus Polytetrafluorethylen.

US 5 624 524 betrifft ein Plastik Laminat aus einer Acrylfolie die mit einer Farbstoffschicht versehen ist und einem Polyesterfolie die mit einem Heißklebstoff versehen ist.

DE 92 19 767 U betrifft Kunststoffverbunde, bei denen mindestens ein Teil aus Acrylglas besteht und mindestens eine Acrylverbindung durch Schweißen bewirkt wird.

EP-A-0 710 549 beschreibt ein Verfahren zur Herstellung von flächigen Verbunden aus Polymethacrylat-Kunststoff durch thermisches Verkleben von mindestens zwei an ihren Oberflächen erwärmten Teilen aus Polymethacrylat-Kunststoff, wobei die an der Klebeseite auf Oberflächen-temperaturen von 130 bis 200 °C vorerwärmten Teile aus Polymethacrylat-Kunststoff, die während der Vorwärmphase ihre ursprüngliche Form beibehalten, zwischen einem Walzenpaar bei dem mindestens eine Walze, mit der die Preßkraft ausgeübt wird, beweglich gelagert ist, mit einer Vorschubgeschwindigkeit zwischen 5 und 200 mm/s und mit einer Preßkraft zwischen 10 und 500 N. EP-A-0 710 548 beschreibt dasselbe Verfahren für thermoplastische Kunststoffe allgemein.

Auch bei diesen Verfahren an sich bewährten Verfahren treten mitunter Probleme, wenn die vorgeschriebene Temperaturführung nicht exakt eingehalten wird. Es kann dabei zu optischen Störungen, Verzug und Haftungsproblemen kommen. Als sehr schwierig hat sich insbesondere die Handhabung von Teilen geringer Dicken erwiesen. Auch die Handhabung von Teilen sehr unterschiedlicher Dicken mit entsprechend unterschiedlichen Wärmeaufnahmekapazitäten bringt in der Praxis häufig Probleme mit sich.

### Aufgabe und Lösung

Es wurde als Ausgabe gesehen, die bekannten Verfahren zur Herstellung von flächigen Verbunden aus Kunststoff durch thermisches Verkleben, s. z. B. EP-A-0 710 549, dahingehend weiterzuentwickeln, daß die Ausführbarkeit in Bezug auf ein qualitativ einwandfreies Ergebnis weniger kritisch wird. Insbesondere soll das thermische Verbinden von dünnen Teilen und unterschiedlichen dicken (asymmetrischen) Teilen mit sehr unterschiedlicher Wärmeaufnahmekapazität verbessert werden. Zudem sollten keine Nachteile bei der Festigkeit der erhaltenen Kunststoffverbunde auftreten.

Die Aufgabe wird gelöst durch ein Verfahren zur Herstellung von flächigen Verbunden aus Kunststoff, ausgewählt aus den thermoplastischen Kunststoffen bzw. Kunststoff-Typen Polymethylmethacrylate, Polyvinylchlorid (PVC), Celluloseester, Polystyrol, ABS-Kunststoffe, Polycarbonate, Polyester, Polyether, Polyketone, Polysulfone oder deren Mischpolymerisate, insbesondere Bisphenol A-Polycarbonate, sowie thermoplastisch und thermoelastisch verformbarem Acrylkunststoff, durch thermisches Verkleben von mindestens zwei an ihren Oberflächen erwärmten Teilen aus Kunststoff, dadurch gekennzeichnet, daß die zwei an ihren Oberflächen erwärmten Teilen aus Kunststoff aus einem mit einer Schicht (S) beschichteten Basismaterial (B) bestehen, wobei die Vicaterweichungstemperatur VET des Kunststoffs der Schicht (S) 5 bis 40 °C niedriger ist als die des Basismaterials (B), das Basismaterial (B) eine Dicke von 1 bis 200 mm und die Schicht (S) eine Dicke von 5 bis 400 µm aufweist, die Teile jeweils an den mit der Schicht (S) versehenen Oberflächen erwärmt und anschließend unter Druck verschweißt werden.

Die Aufgabe wird weiterhin gelöst durch die verfahrensgemäß erhaltenen Kunststoffverbunde.

Vorteilhafte Weiterbildungen der Erfindung sind Gegenstand der betreffenden abhängigen Ansprüche.

### Ausführung der Erfindung

Für das erfindungsgemäße Verfahren werden Kunststoffteile, insbesondere Platten aus Kunststoff, eingesetzt, die aus einem Basismaterial (B) bestehen, das mit einer Schicht (S) beschichtet ist.

Das Basismaterial (B) hat eine Dicke im Bereich üblicher Plattendicken von 1 bis 100 mm, bevorzugt 1 bis 50 mm, insbesondere dünne Platten von 2 bis 20 mm, besonders bevorzugt von 2 bis 10 mm. Bevorzugt sind extrudierte Basismaterialien (B).

Die Fläche des Basismaterials (B) kann z. B. im Bereich von 0,01 bis 10 m² mit Plattenbreiten von zwischen 0,1 und 2 m und Plattenlängen zwischen 0,1 und 5 m liegen.

Die Schicht (S) kann auflackiert oder z. B. mittels Rakeln aufgetragen sein oder bevorzugt, bei thermoplastisch verarbeitbaren Kunststoffen, durch Coextrusion mit dem Basismaterial aufgebracht sein. Die Schicht (S) hat eine Dicke von 5 bis 400, bevorzugt 10 bis 200, besonders bevorzugt 20 bis 80 µm.

Das Basismaterial (B) und die Schicht (S) bestehen aus thermoelastischen oder thermoplastischen, bevorzugt jedoch thermoplastisch verarbeitbaren, insbesondere miteinander verträglichen, gut aufeinander haftenden Kunststoffen.

Geeignete thermoplastische Kunststoffe bzw. Kunststoff-Typen sind z. B. Polymethylmethacrylate, Polyvinylchlorid (PVC), Celluloseester, Polystyrol, ABS-Kunststoffe, Polycarbonate, Polyester, Polyether, Polyketone, Polysulfone oder deren Mischpolymerisate. Bevorzugt sind Polymethylmethacrylat- und Polycarbonat-Kunststoffe, insbesondere Bisphenol A-Polycarbonate.

Bevorzugt sind das Basismaterial (B) und die Schicht (S) aus demselben Kunststoff-Typ. In diesem Fall unterscheiden sich das Basismaterial (B) und die Schicht (S) in ihrer Monomerzusammensetzung insoweit als die Vicaterweichungstemperatur VET (nach ISO 306 Teil B 50) des Kunststoffs der Schicht (S) um 5 bis 40, bevorzugt 10 bis 30 °C niedriger ist als die des Basismaterials (B).

Das Basismaterial (B) kann somit aus z. B. aus einem Polycarbonat mit hoher Vicaterweichungstemperatur VET und die Schicht (S) aus einem Polycarbonat mit entsprechend niedrigerer VET bestehen.

Polymethylmethacrylate sind aus 50 bis 100 Gew.-% Methylmethacrylat aufgebaut. Als Comonomere kommen in erster Linie Alkylester der Acrylsäure mit 1 bis 4 Kohlenstoffatomen im Alkylrest, sowie Acryl- und/oder Methacrylnitril, Styrol oder Maleinsäureanhydrid in Betracht. Bevorzugt sind thermoplastisch und thermoelastisch verformbare Acrylkunststoffe. Ihre Viskositätszahl nach DIN 53 727 bzw. 51 562, Teil 1, liegt üblicherweise im Bereich von 20 bis 1 500 ml/g.

Polymethylmethacrylate mit sehr hohen Molmassen, z. B. mit ca. 10⁶ g/mol und darüber, zeigen als gegossene Acrylgläser ein thermoelastisches Verhalten und sind der thermoplastischen Verarbeitung nicht zugänglich. Gegossenes Polymethylmethacrylat eignet sich jedoch z. B als Basismaterial, auf das die Schicht (S), z. B. aus einem thermoplastischen Polymethylmethacrylat auflackiert wird.

Thermoplastisch verarbeitbare Polymethylmethacrylat-Formmassen zum Spritzgießen haben in der Regel Molmassen (Gewichtsmittel Mw) von 50.000 bis 150.000 g/mol, z. B. ca. 120 000 g/mol, und solche zum Extrudieren eine Molmasse von über 150.000 bis 250.000 g/mol, z. B. ca. 180 000 g/mol.

Das Basismaterial (B) kann z. B. aus einem thermoplastischen Polymethylmethacrylat-Kunststoff aus 95 bis 100 Gew.-% Methylmethacrylatund bis zu 5 Gew.-% Methylacrylat-Einheiten mit einer Vicaterweichungstemperatur VET im Bereich von 100 bis 120 °C, bevorzugt 102 bis 110 °C bestehen.

Die Schicht (S) kann z. B. aus einem thermoplastischen Polymethylmethacrylat-Kunststoff aus 80 bis 95 Gew.-% Methylmethacrylatund entsprechend 20 bis 5 Gew.-% Methylacrylat-Einheiten mit einer Vicaterweichungstemperatur VET von im Bereich von 65 bis 100, bevorzugt 70 bis 90°C bestehen.

Die Schicht (S) kann auch aus einem schlagzäh modifiziertem Polymethylmethacrylat bestehen, das durch Mischung einer Elastomerphase, z. B. einem zwei- oder dreischalig aufgebauten Perl- oder Emulsionspolymerisat, mit einer Polymethylmethacrylat-Matrix erhalten wird. Entsprechende Schlagzähmodifizierungsmittel für Polymethacrylat-Kunststoffe sind hinlänglich bekannt. Herstellung und Aufbau sind z. B. in EP-A 0 113 924, EP-A 0 522 351, EP-A 0 465 049 und EP-A 0 683 028 beschrieben. Durch die Mischung mit der weichen Elastomerphase liegen die Vicaterweichungstemperaturen VET im Bereich von 60 bis 80 °C.

Die Schicht (S) kann auch, bevorzugt in Verbindung mit einer Basisschicht (B) aus Polycarbonat, aus einem Polyurethan-Kunststoff bestehen.

Die für das Verschweißen notwendige Wärmeenergie kann nach verschiedenen an sich bekannten Methoden in die zu verbindenden Teile eingebracht werden, wie z. B. mit Infrarotstrahlern, Heißluftgebläsen, oder auch mit indirekten physikalischen Methoden, wie dem Anlegen von Hochfrequenz- oder Ultraschallfeldern. Dabei werden die mit der Schicht (S) versehenen Oberflächen bevorzugt auf eine Temperatur von 5 bis 30 °C oberhalb der Vicaterweichungstemperatur VST des Kunststoffs der Schicht (S) erwärmt und direkt anschließend unter Druck zusammengepreßt.

Zweckmäßig wird der Druck dabei durch Verwalzen zwischen einem Walzenpaar, bei dem mindestens eine Walze, mit der die Preßkraft ausgeübt wird wird, beweglich gelagert ist, mit einer Vorschubgeschwindigkeit zwischen 5 und 200 mm/s und mit einer Preßkraft zwischen 10 und 500 N ausgeführt wird.

Die Preßkraft, die mit der oberen Walze auf die Polymethacrylat-Teile und den sich bildenden Verbund der Polymethacrylat Teile ausgeübt wird, kann beispielsweise mit einfachen Hebelapparaturen pneumatisch oder hydraulisch erzeugt werden. Im allgemeinen ist die Preßkraft während des gesamten Verpreßvorgangs konstant, wobei Preßkräfte zwischen 10 und 500 N, bevorzugt zwischen 25 und 400 N angewendet werden. Entsprechende Verfahren sind in EP-A 710 548 und EP-A 710 549 beschrieben.

Die miteinander zu verschweißenden Teile können in Bezug auf die für das Basismaterial (B) und die Schicht (S) eingesetzten Kunststoffe und die Dicken des Basismaterial (B) und der Schicht (S) gleich oder verschieden sein. Bevorzugt werden miteinander zu verschweißende Teile gleichen chemischen Aufbaus, bei den das Basismaterial (B) und die Schicht (S) aus zumindest aus demselben Kunststoff-Typ oder aus identischen Kunststoffen bestehen, eingesetzt. Es ist auch vorteilhaft wenn die Dicken der Schicht (S) dabei um nicht mehr als das Doppelte unterscheiden oder bevorzugt gleich dick sind.

Die aus zwei Teilen erhaltenen Kunststoffverbunde bestehen somit außen aus dem Basismaterial (B) und innen aus zwei miteinander verschmolzenen bzw. verschweißten Schichten (S). Entsprechend kann man z. B. ein Basismaterial (B) natürlich auch doppelseitig mit einer Schicht (S) versehen und mit zwei einseitig beschichteten Teilen zu einem aus drei Teilen bestehenden Kunststoffverbund verschweißen. Es versteht sich, daß man nach diesem Prinzip vorgehend auch Kunststoffverbunde aus mehr als drei Teilen erzeugt werden können. In der Praxis sind jedoch meist Kunststoffverbunde aus zwei Teilen von Bedeutung.

Erfindungsgemäße Verbunde können mit plattenförmigen oder auch mit beliebig geformten Acrylglas-Teilen, wobei die die Verbindung eingehende Stelle möglichst eine ebene Fläche ist, hergestellt sein.

Das Basismaterial (B) und die Schichten (S) können transparent aber auch in farbig durchscheinender Ausführung oder pigmentierter Form in dem Verbund vorhanden sein.Dadurch lassen sich bestimmte Farbeffekte im Verbund einstellen. Eine Auftrag der Schichten (S), die nur in Randlagen der zu verbindenden Basismaterialien (B) als Verbindung wirkt, führt zu einem Verbund mit inneren, z. B. rechteckigem Hohlraum, der zur Aufnahme von Informationen, z. B. eingeschweißter Bilder o. ä. dienen kann

### Vorteilhafte Wirkungen der Erfindung

Die Wahl der Schicht (S) aus verträglichen thermoplastischen Kunststoffen, wobei die Vicaterweichungstemperatur VET des Kunststoffs der Schicht (S) 5 bis 40 °C niedriger ist als die des Basismaterials (B), in Kombination mit einer geringen Dicke der Schicht (S) von 5 bis 400 µm bietet den Vorteil, das zur Vorbereitung der Klebestellen eine vergleichsweise nur geringe Wärmemenge eingebracht werden muß, die gerade so groß ist, um die Schicht (S) zu erweichen. Da sich die Wärmemenge unabhängig von der Dicke und Beschaffenheit des Basismaterials dosieren läßt, ist das Risiko von zu geringer oder zu hoher Erhitzung vermindert. Der Toleranzbereich ist höher. Auch der Energiebedarf ist entsprechend geringer.

Es werden optisch gute Verbindungsstellen, vor allem bei farblosen, transparenten Materialien, farblose Verbindungsstellen erzeugt, wie sie bei Verklebungen nicht erhalten werden. Da die Schicht (S) und das Basismaterial (B) aus bereits vor den Erwärmen fest miteinander verbunden Kunststoffen besteht, ergeben sich keine Nachteile in Bezug auf die Festigkeit des erhaltenen Kunststoffverbunds, die ebenso hoch ist wie bei den bekannten Verfahren bei optimaler Temperaturführung. Die Adhäsion der zusammengeschweißten Teile ist so stark, daß beim Versuch die Verbindung gewaltsam zu zerstören, oft nicht die Nahtstelle, sondern das Verbundmaterial selbst bricht.

Das Verschweißen von relativ dünnen Teilen, z. B. im Bereich von 1 bis 6 mm Dicke, miteinander und von solchen dünnen Teilen mit dickeren Teilen ist mit hoher Sicherheit in Bezug auf ein optisch einwandfreies Ergebnis möglich.

### Weitere Ausführungsformen und Gestaltungsmöglichkeiten

Durch das erfindungsgemäße Verfahren werden eine Reihe von weiteren, aus EP-A 710 548 und EP-A 710 549 an sich bekannte Ausführungsformen in besonders hoher optischer Qualität zugänglich. Aufgrund der relativ hohen Toleranzen bei der Erwärmung der Schichten (S) ist zudem, insbesondere bei dünnen Teilen im Bereich von 1 bis 6 mm Dicke und der Kombination von dünnen Teilen mit dickeren Teilen eine Fertigung mit vergleichsweise geringem Ausschuß möglich.

Es können Verbunde aus Kunststoffteilen mit flächigen Rändern, wie beispielsweise Kuppeln, Tonnengewölbe oder Schalen, hergestellt werden, indem die Ränder selektiv erhitzt werden und nach dem erfindungsgemäßen Verfahren zusammengefügt werden.

In weiteren Ausgestaltungen der Erfindung können flächige oder längliche Gegenstände zwischen den Klebeseiten der Platten oder Folien eingelagert werden. Voraussetzung für die optisch einwandfreie Einlagerung solcher Gegenstände, d.h. beispielsweise Vermeidung von Lufteinschlüssen oder von Schlierenbildung, ist, daß die Dicke der Gegenstände maximal 50 %, vorzugsweise maximal 25 % der Dicke der Platten oder Folien ausmacht. Flächige Gegenstände, die zwischen den Schichten (S) der Platten oder Folien eingelagert werden können, sind beispielsweise: Fotographien, Drucke, farbige Folien, Pigmentpapiere oder Folien aus thermoplastischen Elastomeren, wobei mit letzteren Sicherheitsglas-Verbunde erzeugt werden können. Dabei ist zu beachten, daß die eingelagerten Gegenstände maximal 90 % der Fläche der Klebeseiten einnehmen dürfen. Längliche Gegenstände, die zwischen den Platten oder Folien eingelagert werden können, sind beispielsweise schmale Kunststoffbahnen, die eingefärbt sein können, Drähte, Stahlspiralen, Stoffbänder, Papierstreifen oder bevorzugt Fäden, ganz besonders bevorzugt Kunststoff-Fäden mit hoher Elastizität und hohem Modul, wie beispielsweise Polyester- oder Nylonfasern, deren Einlagerung zu besonders schlagfesten Verbunden führt.

Die Platten oder Folien können Gravuren oder Einprägungen besitzen, die Tiefen von mindestens 0,2 mm, vorzugsweise von mindestens 1 mm aufweisen, die sich entweder an der Außenseite oder an der Klebeseite der Platten oder Folien befinden. Liegen die Gravuren oder Einprägungen an der Klebeseite, so lassen sich dreidimensionale Einschlüsse definierter Gestalt im Verbund erzeugen. Bevorzugt werden solche dreidimensionalen Einschlüsse durch das Verkleben von mindestens zwei Platten erzeugt, bei denen jede Platte Gravuren oder Einprägungen auf der Klebeseite aufweist, die spiegelbildlich zusammengefügt werden. Bedingung für die Herstellung solcher dreidimensionaler Einschlüsse ist, daß die Gravuren oder Einprägungen beim Erwärmen der Oberflächen der Klebeseite formstabil bleiben.

## Patentansprüche

1. Verfahren zur Herstellung von flächigen Verbunden aus Kunststoff, ausgewählt aus den thermoplastischen Kunststoffen bzw. Kunststoff-Typen Polymethylmethacrylate, Polyvinylchlorid (PVC), Celluloseester, Polystyrol, ABS-Kunststoffe, Polycarbonate, Polyester, Polyether, Polyketone, Polysulfone oder deren Mischpolymerisate, insbesondere Bisphenol A-Polycarbonate, sowie thermoplastisch und thermoelastisch verformbarem Acrylkunststoff, durch thermisches Verkleben von mindestens zwei an ihren Oberflächen erwärmten Teilen aus Kunststoff,
**dadurch gekennzeichnet, daß**
die zwei an ihren Oberflächen erwärmten Teilen aus Kunststoff aus einem mit einer Schicht (S) beschichteten Basismaterial (B) bestehen, wobei die Vicaterweichungstemperatur VET des Kunststoffs der Schicht (S) 5 bis 40 °C niedriger ist als die des Basismaterials (B), das Basismaterial (B) eine Dicke von 1 bis 200 mm und die Schicht (S) eine Dicke von 5 bis 400 µm aufweist, die Teile jeweils an den mit der Schicht (S) versehenen Oberflächen erwärmt und anschließend unter Druck verschweißt werden.

2. Verfahren nach Anspruch 1, **dadurch gekennzeichnet, daß** die mit der Schicht (S) versehenen Oberflächen auf eine Temperatur von 5 bis 30 °C oberhalb der Vicaterweichungstemperatur VST des Kunststoffs der Schicht (S) erwärmt werden.

3. Verfahren nach Anspruch 1 oder 2, **dadurch gekennzeichnet, daß** die erwärmten Teile durch Verwalzen verbunden werden.

4. Verfahren nach Anspruch 3, **dadurch gekennzeichnet, daß** das Verwalzen zwischen einem Walzenpaar, bei dem mindestens eine Walze, mit der die Preßkraft ausgeübt wird, beweglich gelagert ist, mit einer Vorschubgeschwindigkeit zwischen 5 und 200 mm/s und mit einer Preßkraft zwischen 10 und 500 N ausgeführt wird.

5. Verfahren nach einem oder mehreren der Ansprüche 1 bis 4, **dadurch gekennzeichnet, daß** die Schicht (S) auflackiert wird, mittels Rakeln aufgetragen wird oder bei thermoplastisch verarbeitbaren Kunststoffen, durch Coextrusion mit dem Basismaterial aufgebracht wird.

6. Verfahren nach einem oder mehreren der Ansprüche 1 bis 5, **dadurch gekennzeichnet, daß** das Basismaterial (B) und die Schicht (S) aus dem selben Kunststoff-Typ bestehen.

7. Verfahren nach Anspruch 6, **dadurch gekennzeichnet, daß** das Basismaterial (B) aus gegossenem Polymethylmethacrylat besteht und die Schicht (S) eine auflackierte Schicht aus thermoplastischen Polymethylmethacrylat ist.

8. Verfahren nach einem oder mehreren der Ansprüche 1 bis 4, **dadurch gekennzeichnet, daß** das Basismaterial (B) aus Polycarbonat besteht und die Schicht (S) aus einem Polyurethan-Kunststoff besteht.

9. Kunststoffverbund erhältlich nach dem Verfahren gemäß einem oder mehreren der Ansprüche 1 bis 7.

10. Kunststoffverbund nach Anspruch 9, **dadurch gekennzeichnet, daß** zwischen die zu verklebenden Teile flächige oder längliche Gegenstände mit Dicken, die maximal 50 %, vorzugsweise maximal 25 % der Dicke der verschweißten Teile betragen, eingesetzt werden, wobei die flächigen oder länglichen Gegenstände maximal 90 % der Klebefläche bedecken dürfen

11. Kunststoffverbund nach Anspruch 9 oder 10, **dadurch gekennzeichnet, daß** die zu verklebenden Teile an ihrer Klebefläche Gravuren oder Einprägungen von mindestens 0,2 mm, vorzugsweise von mindestens 1 mm Tiefe aufweisen.

## Claims

1. Method of producing flat composites of plastics selected from the thermoplastic plastics or the plastics of the types polymethyl methacrylates, polyvinyl chloride (PVC), cellulose esters, polystyrene, ABS plastics, polycarbonates, polyesters, polyethers, polyketones, polysulphones or the copolymers thereof, particularly bisphenol A-polycarbonates, as well as thermoplastically and thermo-elastically deformable acrylic plastics, by thermally bonding at least two plastics components heated at their surfaces, **characterised in that** the two plastics components heated at their surfaces consist of a base material (B) coated with a layer (S), the Vicat softening temperature VET of the plastics of the layer (S) being 5-40°C lower than that of the base material (B), the base material (B) having a thickness of 1 to 200 mm and the layer (S) having a thickness of 5 to 400 µm, the components are each heated at the surface provided with the layer (S) and then welded together under pressure.

2. Method according to claim 1, **characterised in that** the surfaces provided with the layer (S) are heated to a temperature of 5-30°C above the Vicat softening temperature VST of the plastics of the layer (S).

3. Method according to claim 1 or 2, **characterised in that** the heated components are attached by rolling.

4. Method according to claim 3, **characterised in that** the rolling is carried out between a pair of rollers in which at least one roller which exerts the pressing force is mounted to be movable at a speed of advance of between 5 and 200 mm/s and with a pressing force of between 10 and 500 N.

5. Method according to one or more of claims 1 to 4, **characterised in that** the layer (S) is painted on, applied by means of doctor blades or, in the case of thermoplastically workable plastics, applied by co-extrusion with the base material.

6. Method according to one or more of claims 1 to 5, **characterised in that** the base material (B) and the layer (S) consist of the same type of plastics.

7. Method according to claim 6, **characterised in that** the base material (B) consists of cast polymethyl methacrylate and the layer (S) is a painted-on layer of thermoplastic polymethyl methacrylate.

8. Method according to one or more of claims 1 to 4, **characterised in that** the base material (B) consists of polycarbonate and the layer (S) consists of a polyurethane plastics.

9. Plastics composite obtainable by the method according to one or more of claims 1 to 7.

10. Plastics composite according to claim 9, **characterised in that** between the components which are to be bonded together, flat or elongate objects with thicknesses amounting to at most 50%, preferably at most 25% of the thickness of the welded components, are inserted, the flat or elongate objects covering not more than 90% of the bonding surface.

11. Plastics composite according to claim 9 or 10, **characterised in that** the components to be bonded together have on their bonding surface etchings or indentations at least 0.2 mm, preferably at least 1 mm deep.

## Revendications

1. Procédé de fabrication de laminés de polymères, sélectionnés à partir des polymères thermoplastiques ou des types de polymères polyméthylméthacrylates, polyvinylchloride (PVC), ester de cellulose, polystyrol, polymères ABS, polycarbonates, polyester, polyéther, polycétones, polysulfones ou leurs copolymères, en particulier les polycarbonates de bisphénol A, ainsi que les polymères acryliques déformables thermoplastiques et thermoélastiques, par collage chimique d'au moins deux pièces en polymère chauffées sur leur surface,
**caractérisé en ce que**
les deux pièces en polymère chauffées sur leur surface se composent d'un matériau de base (B) recouvert par une couche (S), dont la température de ramollissement Vicat VET du polymère de la couche (S) est plus faible de 5 à 40°C que celle du matériau de base (B), le matériau de base (B) présente une épaisseur de 1 à 200 mm et la couche (S) a une épaisseur de 5 à 400 µm, et les pièces sont respectivement chauffées au niveau de leur surface pourvue de la couche (S) et sont ensuite thermosoudées sous pression.

2. Procédé selon la revendication 1,
**caractérisé en ce que**
les surfaces pourvues de la couche (S) sont chauffées à une température de 5 à 30°C, au-dessus de la température de ramollissement Vicat VST du polymère de la couche (S).

3. Procédé selon la revendication 1 ou 2,
**caractérisé en ce que**
les pièces chauffées sont reliées par laminage.

4. Procédé selon la revendication 3,
**caractérisé en ce que**
le laminage est effectué à une vitesse d'avance comprise entre 5 et 200 mm/s et avec une force de pression comprise entre 10 et 500 N entre une paire de cylindres lamineurs, parmi lesquels au moins un cylindre lamineur, avec lequel est exercée la force de pression, est logé de façon mobile.

5. Procédé selon l'une ou plusieurs des revendications 1 à 4,
**caractérisé en ce que**
la couche (S) est revêtue, appliquée au moyen de racles ou appliquée pour des polymères transformables thermoplastiques par co-extrusion avec le matériau de base.

6. Procédé selon l'une ou plusieurs des revendication 1 à 5,
**caractérisé en ce que**
le matériau de base (B) et la couche (S) se composent du même type de polymère.

7. Procédé selon la revendication 6,
**caractérisé en ce que**
le matériau de base (B) se compose de polyméthylméthacrylate coulé et la couche (S) est une couche revêtue à base de polyméthylméthacrylate thermoplastique.

8. Procédé selon l'une ou plusieurs des revendications 1 à 4,
**caractérisé en ce que**
le matériau de base (B) se compose de polycarbonate et la couche (S) se compose d'un polymère de polyuréthane.

9. Laminé de polymères pouvant être obtenu selon le procédé conforme à l'une ou plusieurs des revendications 1 à 7.

10. Laminé de polymères selon la revendication 9,
**caractérisé en ce qu'**
entre les pièces à coller sont utilisés des objets plats ou oblongs ayant des épaisseurs égales au maximum à 50 %, de préférence à 25 % de l'épaisseur des pièces thermosoudées, les objets plats ou oblongs pouvant recouvrir au maximum 90 % de la surface de collage.

11. Laminé de polymères selon la revendication 9 ou 10,
**caractérisé en ce que**
les pièces à coller présentent au niveau de leur surface de collage des gravures ou des empreintes dont la profondeur est au minimum égale à 0,2 mm, de préférence au minimum égale à 1 mm.
